# EUROPEAN PATENT APPLICATION

(11) **EP 4 810 392 A1**
(43) Date of publication of application: **23.09.2026**
(21) Application number: 25837667.2
(22) Date of filing: 14.07.2025
(51) Int. Cl.: B65C 1/04, B65C 9/36, B65C 9/30

(54) **BATTERY CELL LABEL ATTACHMENT APPARATUS AND METHOD**

(30) Priority: 12.07.2024 KR 20240092351
(71) Applicant: LG Energy Solution, Ltd., Seoul 07335 (KR)
(72) Inventor: KIM, Ji Woo, Daejeon 34122 (KR); YOON, Min Koo, Daejeon 34122 (KR)
(74) Representative: Plasseraud IP
(86) International application number: PCT/KR2025/010270
(87) International publication number: WO 2026/014991

(57) **Abstract**

The present disclosure relates to an apparatus and method for attaching a label for a battery cell, which are capable of securing uniform attachment quality of a label L attached to an outer circumferential surface of a battery cell B using air injection and a side block. An apparatus for attaching a label for a battery cell in accordance with an exemplary embodiment includes a cell mounting part configured to mount a battery cell (B) and attach a label (L) on a front surface of the battery cell (B), an air injection part disposed on a bottom surface of the cell mounting part, on which the battery cell (B) is mounted, to inject air upward, a pressing block horizontally moving from both sides of the cell mounting part toward both side surfaces of the battery cell (B) to press the label (L), and a roller part horizontally moving on a upper surface of the battery cell (B) so that a portion of the label (L) is attached to be in close contact with the upper surface of the battery cell (B).

## Description

### TECHNOLOGICAL AREA

The present disclosure relates to an apparatus and method for attaching a label for a battery cell, and more particularly, to an apparatus and method for attaching a label for a battery cell, which are capable of attaching a label on a constant surface regardless of tolerance using air injection and a side pressing block.

### BACKGROUND

Secondary batteries, which are used as energy sources for various electronic devices, are widely used in mobile devices and electric vehicles. Particularly, small devices include a plurality of battery cells, and these battery cells are broadly classified into cylindrical type batteries, prismatic type batteries, and pouch type batteries depending on their external shapes.

Various information about the batteries, such as the manufacturer, model names, product numbers, various specifications or quality marks, and precautions for use, are displayed in the form of letters or marks on outer surfaces of the battery cells. Such information is usually displayed on a printed label and attached to the surface of the battery cell.

The label may be manufactured from regular paper, vinyl-coated paper, polymer resin materials, thin-film metal materials, etc., and an adhesive may be applied to a rear surface of the label so as to be attached to the battery cell in the form of a sticker.

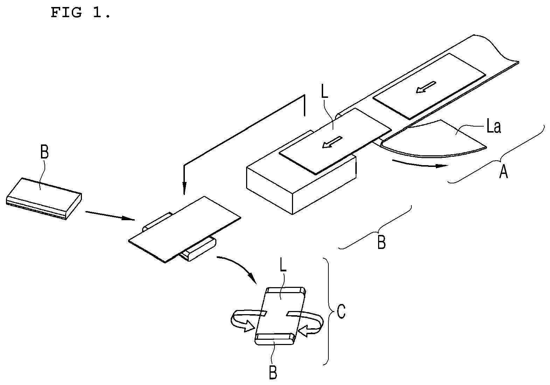

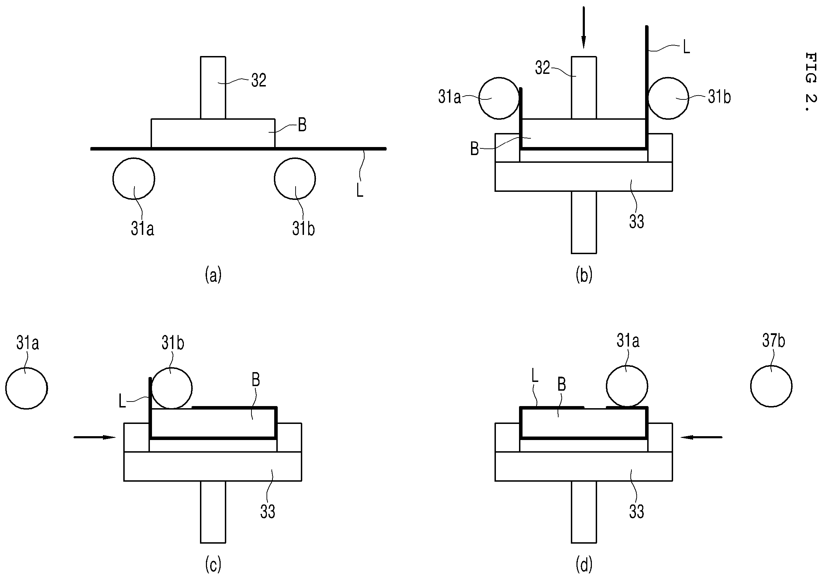

FIG. 1 is a schematic view illustrating an attachment process using an apparatus for attaching a label for a battery cell according to the related art, and (a) to (d) of FIGS. 2 are views for explaining the attachment process by using attaching unit of FIG. 1.

As illustrated in FIG. 1, in the apparatus for attaching the label generally used in an automated production line, a label L is attached to a battery cell B through a series of automated processes. That is, the label L brought from a label supply unit 10 is detached from a release paper La and prepared as a single sheet in a label preparation unit 20 and then transferred to the attachment unit 30 so as to be attached to the battery cell B, which is an attachment target.

As illustrated in (a) of FIG. 2, the attachment unit 30 is put into the process with the label L attached to a front surface of the battery cell B disposed on a lifter 32. In addition, as illustrated in (b) of FIG. 2, the lifter 32 descends (or ascends) to accommodate the battery cell B inside an accommodation space provided in a jig 33. Here, while the battery cell B is being accommodated inside the accommodation space of the jig 33, the battery cell B passes between two attachment rollers 31a and 32b, and the two attachment rollers 31a and 32b attach the label L while allowing the label L to be in close contact with a side surface of the battery cell B. In addition, when the ascent (or descent) of the lifter 32 is completed, the label L is bent and attached along the outer surface of the battery cell B accommodated in the accommodation space. Next, as illustrated in (c) of FIG. 2, in a state in which the jig 33 holds the battery cell B, while moves horizontally toward the attachment roller 31b at one side, a portion of the label L is attached to be in close contact with an upper portion of the battery cell B by the attachment roller 31b at the one side. Finally, as illustrated in (d) of FIG. 2, the jig 33 moves horizontally toward the attachment roller 31a at the other side while holding the battery cell B, and the remaining portion of the label L is attached to the upper portion of the battery cell B by the attachment roller 31a at the other side, thereby completing the attachment of the label L.

However, the apparatus for attaching the label for the battery cell according to the related art has a limitation in that, when the battery cell B is accommodated in the accommodation space of the jig 33, and the label L is bent and attached to the side surface of the battery cell B, the bending and attachment of the label L is not consistent due to a tolerance between the accommodation space (or the two attachment rollers 31a and 32b) and the battery cell B. That is, there is a limitation in that the label L does not adhere to be in close contact with the side surface of the battery cell B due to the tolerance that has occurred. Thus, there is a limitation in that wrinkles of the label L are generated on the label L attached to the side surface of the battery cell B.

In addition, since the label L attached to the side surface of the battery cell B does not adhere, the label L having a plate shape causes distortion from left to right, and even when the label L adheres to an upper portion of the battery cell B by the two attachment rollers 31a and 32b, there is a limitation in that the wrinkles are generated.

In relation to the related art, following prior arts are known.
(Patent Document 1) Korean Patent Registration No. 10-1502783 (Registration Date: March 10, 2015)
(Patent Document 2) Korean Patent Registration No. 10-1897265 (Registration Date: September 04, 2018)

### TECHNICAL PROBLEM

The present invention seeks to provide a label attaching apparatus and method for a battery cell that ensures uniform attachment quality of a label (L) onto the outer circumferential surface of a battery cell (B) by using air injection and side blocks. This allows the label (L) to be attached to the outer circumferential surface of the battery cell (B) as a uniform, wrinkle-free surface, regardless of the tolerance between the receiving space of a jig, or between the two attachment rollers (31a, 32b) and the battery cell (B).

### TECHNICAL SOLUTION

In accordance with an exemplary embodiment, an apparatus for attaching a label for a battery cell includes: a cell mounting part configured to mount a battery cell (B) and attach a label (L) on a front surface of the battery cell (B); an air injection part disposed on a bottom surface of the cell mounting part, on which the battery cell (B) is mounted, to inject air upward; a pressing block horizontally moving from both sides of the cell mounting part toward both side surfaces of the battery cell (B) to press the label (L); and a roller part horizontally moving on a upper surface of the battery cell (B) so that a portion of the label (L) is attached to be in close contact with the upper surface of the battery cell (B).

The cell mounting part may be configured to adjust a position of the label (L) so that a center of the label (L) being transferred is aligned with a center of a front surface of the battery cell (B).

The air injection part may include at least two or more air injection ports to inject air from both the side surfaces of the label (L), which is attached to the front surface of the battery cell (B), toward the battery cell (B).

The air injection ports may be disposed to be spaced a predetermined interval that is wider by a predetermined distance or more than a width of the battery cell (B) from each other.

Each of the air injection ports may be configured to protrude by a predetermined height from a bottom surface of the cell mounting part.

The apparatus may further include at least one or more lifting protrusions between the air injection ports and the side surface of the battery cell (B) as the bottom surface of the cell mounting part.

The pressing block may horizontally move in a straight line to both the side surfaces of the battery cell (B) through a driving unit using an elastic body to directly press the label (L) so that the bent label (L) is attached to the side surface of the battery cell (B).

A upper surface of the pressing block may be disposed on a plane at the same height as the upper surface of the battery cell (B).

The pressing block may be provided with a guide rail/guide groove so as to be slidable on the bottom surface of the cell mounting part.

The pressing block may have at least one or more moving grooves in a lower end thereof.

The roller part may include at least two or more attachment rollers and may be configured to linearly reciprocate on the upper surface of the battery cell (B) so that the label (B) is attached to the upper surface of the battery cell (B).

In accordance with another exemplary embodiment, a method for attaching a label for a battery cell includes: a process (A) of mounting a battery cell (B) transferred from a battery cell input unit on a cell mounting part (410) to attach a label (L) transferred through a label supply unit on a center of a front surface of the battery cell (B); a process (B) of injecting air from an air injection portion provided on a bottom surface of the cell mounting part to lift both side surfaces of the label (L) attached to the front surface of the battery cell (B) in a direction of the battery cell (B); a process (C) of allowing a pressing block to directly press the label (L) of a side surface of the battery cell (B) from both the side surfaces of the battery cell (B) toward a center so that the label (L) of the side surface of the battery cell (B) is attached to the side surface of the battery cell (B); and a process (D) of attaching the label (L) lifted on the side surface of the battery cell (B) to the upper surface of the battery cell (B) while an attachment roller horizontally moves on the upper surface of the battery cell (B).

The process (A) may further include a process of adjusting a position of the label (L) so that a center of the label (L) transferred through the label supply unit is aligned with a center of the upper surface of the battery cell (B).

In the process (C), the pressing block may horizontally move in a straight line to both the side surfaces of the battery cell (B) by using a driving unit using an elastic body.

In the process (D), in a state in which the battery cell (B) is fixed, the attachment roller may horizontally move so that the lifted label (L) is attached to the upper surface of the battery cell (B).

In the process (D), the two attachment rollers may horizontally move simultaneously or sequentially from both the side surfaces of the battery cell (B), which are directly fixed, toward a center.

In the process (D), in a state in which the attachment roller is fixed, the battery cell (B) may horizontally move so that the lifted label (L) is attached to the upper surface of the battery cell (B).

The process (D) may include: a process of allowing the battery cell (B) to horizontally move toward a first attachment roller disposed at one side so that a portion of the label (L) is attached to be in close contact with an upper portion of the battery cell (B) by the first attachment roller in a state in which first and second attachment rollers are fixed; and a process of allowing the battery cell (B) to horizontally move toward the second attachment roller disposed at the other side so that a portion of the label (L) is attached to be in close contact with the upper portion of the battery cell (B) by the second attachment roller in the state in which the first and second attachment rollers are fixed.

### EFFECTS OF THE INVENTION

According to an embodiment of the present invention, it is possible to ensure uniform attachment quality of the label (L) affixed to the outer circumferential surface of the battery cell (B). To achieve this, air injection and side blocks are used to enable the label (L) to be attached to the outer circumferential surface of the battery cell (B) as a uniform, wrinkle-free surface, regardless of the tolerance between the receiving space of a jig, or between the two attachment rollers (31a, 32b) and the battery cell (B).

### BRIEF DESCRIPTION OF THE DRAWINGS

FIG. 1 is a schematic view illustrating an attachment process using an apparatus for attaching a label for a battery cell in accordance with a related art;
(a) to (d) of FIG. 2 are detailed views for explaining an attachment process using an attachment unit of FIG. 1;
FIG. 3 is a view illustrating a configuration of an apparatus for attaching a label for a battery cell in accordance with an exemplary embodiment;
FIG. 4 is a detailed view illustrating a configuration of a label attachment unit of FIG. 3;
FIG. 5 is a flowchart for explaining a method for attaching a label for a battery cell in accordance with an exemplary embodiment; and
(a) to (d) of FIG. 6 are views for explaining a process of attaching the label for the battery cell in accordance with an exemplary embodiment.

### DETAILED DESCRIPTION OF EMBODIMENTS

Hereinafter, exemplary embodiments of the present invention will be described in detail with reference to the accompanying drawings. The present invention may, however, be embodied in different forms and should not be construed as limited to the embodiments set forth herein. Rather, these embodiments are provided so that the present invention will be thorough and complete, and will fully convey the scope of the present invention to those skilled in the art. In order to explain the present invention in detail, the drawings may be exaggerated, and the same symbols in the drawings refer to the same elements.

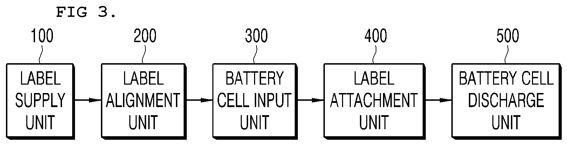

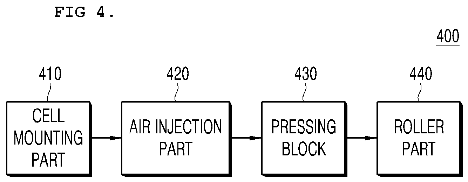

FIG. 3 is a view illustrating a configuration of an apparatus for attaching a label for a battery cell in accordance with an exemplary embodiment. FIG. 4 is a detailed view illustrating a configuration of a label attachment unit of FIG. 3.

Referring to FIG. 3, an apparatus for attaching a label for a battery cell in accordance with an exemplary embodiment may include a label supply unit 100, a label alignment unit 200, a battery cell input unit 300, a label attachment unit 400, and a battery cell discharge unit 500.

The label supply unit 100 may move a release paper of a label L, which is in the form of a continuous sheet, to a label L adsorption position of the label attachment unit 400 in advance. Here, the label supply unit 100 may perform a linear reciprocating motion in a direction, in which the label L enters (forward direction), and in an opposite direction (backward direction) to support a lower portion of the release paper entering when the label L enters, and moves the release paper, from which the label L is separated, in the backward direction to separate the label L from the release paper during the entry process.

As an embodiment, the label supply unit 100 may include a plurality of rollers installed vertically and horizontally to stably move the release paper having the label L attached to a upper surface thereof, and each of the rollers may be connected to a driving motor through the plurality of rollers or the like or moves the release paper by an independently installed motor. In addition, the label supply unit 100 may separate a portion of the label L attached to the moving release paper, for example, by a distance of approximately 35 mm, from the release paper and may forcibly feed the label L separated from the release paper so that the label attachment unit 400 stably absorbs the label L to accurately enter the label absorption position. For this, the label supply unit 100 may include the plurality of rollers that rotate by a rotating shaft that rotates by a motor. Here, the plurality of rollers may be disposed to be spaced apart from each other on the rotating shaft that is coupled to the motor to serve to support the label L by being in contact with the label L, and the rotating shaft may be rotatably coupled to a main body to enable the plurality of rollers to perform a rolling motion.

The label alignment unit 200 may allow the label L separated from the release paper to be seat on a label alignment frame with one side opened. Here, the label alignment unit 200 may include a label alignment bar that linearly reciprocates to an opening of the label alignment frame so that a center of the label L is disposed at a center of the label alignment frame to align a width of the label L in an amplitude direction. The label alignment bar may be coupled to a pneumatic or hydraulic cylinder to reciprocate linearly.

The battery cell input unit 300 may sequentially supply battery cells B through a linear reciprocating conveyor to vacuum-absorb the battery cells B one by one, thereby transferring the battery cells B to the label attachment unit 400. As an embodiment, the battery cell input unit 300 may include a transfer guide installed in a direction perpendicular to the conveyor, and a transfer pad that reciprocates linearly along the transfer guide to vacuum-absorb the battery cells B supplied by the conveyor one by one, thereby inputting the battery cells B into the label attachment unit 400.

The label attachment unit 400 may attach the label L to a front surface of each of the battery cells B and lift the side label L of the battery cell B using air injected toward the battery cell B at both sides of the label L attached to the front surface of the battery cell B and then press the label L , thereby attaching the label L to an outer circumferential surface of the battery cell B.

Referring to FIG. 4, the label attachment unit 400 may include a cell mounting part 410 that mounts the battery cell B and attaches the label L to the front surface of the battery cell B, an air injection part 420 that is disposed on a bottom surface of the cell mounting part 410, on which the battery cell B is mounted, and has a pair of air injection ports 420a and 420b that inject air upward, two pressing blocks 430a and 430b that move horizontally in a direction of both side surfaces of the battery cell B from both sides of the cell mounting part 410 to press the label L, and a roller part 440 that is provided with at least one or more attachment rollers 440a and 440b that move horizontally on upper surfaces of the pressing blocks 430a and 430b and a upper surface of the battery cell B so that a portion of the label L is attached to the upper surface of the battery cell B.

The cell mounting part 410 may be installed horizontally on the same line as the label supply unit 100 to adjust the position of the label L so that the center of the label L being transferred is aligned with the center of the front surface of the battery cell B.

The air injection part 420 may include at least two air injection ports 420a and 420b to inject air toward the battery cell B from both the sides of the label L attached to the front surface of the battery cell B. The air injection ports 420a and 420b may be disposed to be spaced an interval that are wider by a predetermined distance or more than a width of the battery cell B from each other. The air injection part 420 may be configured to protrude by a predetermined height from the bottom surface of the cell mounting part 410. The air injection part 420 may be configured to protrude by a predetermined height so that the side surface of the label L attached to the front surface of the battery cell B is spaced a predetermined height from the bottom surface of the cell mounting part 410. This may allow the side surface of the label L to be easily bent toward the battery cell B due to the air injected from the air injection part 420.

Here, the air injection part 420 may not protrude to a predetermined height, and instead, a lifting protrusion 450 may be additionally configured on the bottom surface of the cell mounting part 410. At least one lifting protrusion 450 may be configured between the air injection part 420 and the side surface of the battery cell B. The lifting protrusion 450 may allow the side surface of the label L attached to the front surface of the battery cell B to be maintained so as to ascend to a predetermined height, and thus, the side surface of the label L may be easily bent toward the battery cell B due to the air injected from the air injection part 420.

As described above, since the lifting protrusion 450 or/and the air injection part 420 is configured to protrude to a predetermined height, when the label L is bent to both the sides of the battery cell B, the label L may be in more close contact with the side surface of the battery cell B to suppress an occurrence of wrinkles on the label L and also prevent an occurrence of air bubbles or the like between the label L and the battery cell B.

For reference, when the air injection part 420 is configured to protrude to a predetermined height, and also, the lifting protrusion 450 is provided, the lifting protrusion 450 may be configured to be higher than the protruding height of each of the air injection ports 420a and 420b, and thus, the label at a side closer to the battery cell may have an 'S' shape with a higher position than an end side (a side of the lifting protrusion 450). This may enable the label L to be in more close contact with the side surface of the battery cell when the label L is bent to both the sides of the battery cell B to suppress the occurrence of the wrinkles on the label and more effectively prevent the occurrence of the air bubbles between the label and the battery cell.

The pressing block 430 may be a unit that presses the label L at both the sides of the battery cell B and may be disposed on each of both the sides of the battery cell B, at which the air injection part 420 is disposed, to directly press the label L so that the bent label L is attached to the side surface of the battery cell B by moving in a straight horizontal direction to both the side surfaces of the battery cell B through a driving unit 431 using an elastic body such as a spring. As described above, since both the side surfaces of the battery cell B are directly pressed through the pressing block 430, the side surface of the battery cell B may be uniformly attached without being affected by tolerance.

Here, the upper surface of the pressing block 430 may be configured to be disposed on a plane at the same height as the upper surface of the battery cell B. In addition, the pressing block 430 may be configured to be provided with a guide rail/guide groove so as to be easily slid on the bottom surface of the cell mounting part 410. In addition, when the pressing block 430 is slid in the state of being in close contact with the bottom surface of the cell mounting part 410, at least one moving groove may be defined at a position corresponding to a lower end of the pressing block 430 to prevent the bottom surface of the cell mounting part 410 from being in contact with the protruding air injection part 420 and the protruding lifting protrusion 450.

The roller part 440 may be provided with at least two attachment rollers 440a and 440b to linearly reciprocate on the upper surface of the battery cell B, thereby attaching the label L to the upper surface of the battery cell B. The roller part 440 may closely attach the left and right labels L protruding from the upper portion of the battery cell B to the upper surface of the battery cell B while the attachment rollers 440a and 440b reciprocate linearly in the left and right direction.

In addition, finally, the battery cell discharge unit 500 may be disposed at a rear end of the label attachment unit 400 to discharge the battery cell B with the label L attached to the outside.

The apparatus for attaching the label for the battery cell in accordance with an exemplary embodiment may further include a position alignment sensor (not shown) installed between the label alignment unit 200 and the label attachment unit 400 to sense a distance between the label L and the label attachment position so as to transfer the transferred label L to an accurate label attachment position.

Hereinafter, a method for attaching a label for a battery cell in accordance with an exemplary embodiment will be described. The method for attaching the label for the battery cell in accordance with an exemplary embodiment may be a method for processing a signal received using the above-described apparatus for attaching the label for the battery cell, and thus, since the above-described content with respect to the apparatus for attaching the label for the battery cell are applied as it is, description of duplicated contents may be omitted.

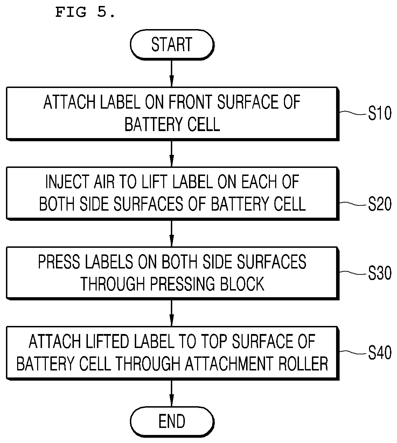

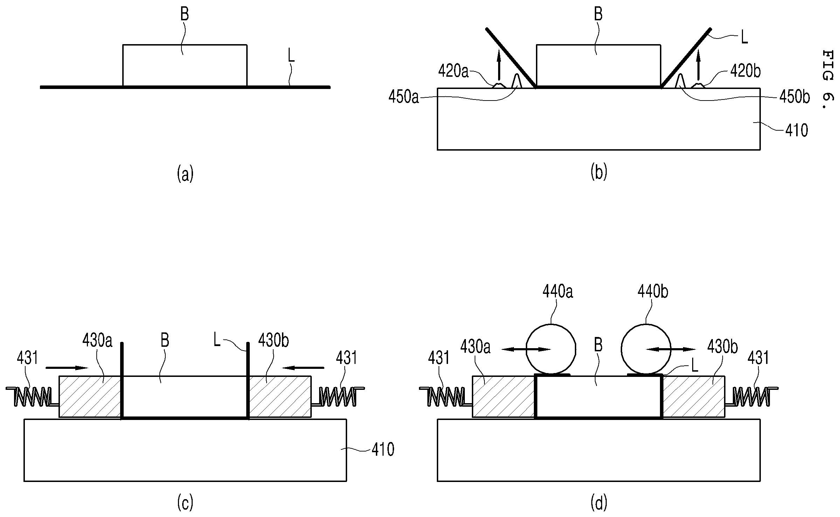

FIG. 5 is a flowchart for explaining a method for attaching a label for a battery cell in accordance with an exemplary embodiment, and (a) to (d) of FIG. 6 are views for explaining a process of attaching the label for the battery cell in accordance with an exemplary embodiment.

Referring to FIGS. 5 and 6, a method for attaching a label for a battery cell in accordance with an exemplary embodiment will be described as follows.

As illustrated in (a) of FIG. 6, after a battery cell B transferred from a battery cell input unit 300 is mounted on a cell mounting part 410, a label L transferred through a label supply unit 100 may be attached to a center of a front surface of the battery cell B (S10). The battery cell B with the label L attached to the front surface may be disposed on an upper portion of the cell mounting part 410. Here, the position of the label L may be adjusted so that the center of the label L transferred through the label supply unit 100 is aligned with a center of a upper surface of the battery cell B.

Next, as illustrated in (b) of FIG. 6, air may be injected from air injection ports 420a and 420b formed on a bottom surface of the cell mounting part 410 to bend both side surfaces of the label L attached to the front surface of the battery cell B toward the battery cell B (S20). That is, air may be injected from the front surface to a rear surface of the battery cell B to lift the labels L of both the side surfaces of the battery cell B.

Here, the air injection ports 420a and 420b may be configured to protrude by a predetermined height from the bottom surface of the cell mounting part 410, and thus, the side surface of the label L attached to the front surface of the battery cell B may be spaced a predetermined height from the bottom surface of the cell mounting part 410. This may allow the side surface of the label L to be easily bent toward the battery cell B due to the air injected from the air injection parts 420a and 420b. Alternatively, the cell mounting part 410 may be configured to be provided with at least one or more lifting protrusions 450a and 450b additionally between the air injection ports 420a and 420b and the side surface of the battery cell B at the bottom surface on which the battery cell B is mounted, and thus, the side surface of the label L attached to the front surface of the battery cell B may be maintained to ascend by a predetermined height, and similarly, the side surface of the label L may be more easily bent toward the battery cell B due to the air injected from the air injection ports 420a and 420b.

Continuously, as illustrated in (c) of FIG. 6, a pressing block 430 may directly press the side label L of the battery cell B from both the side surfaces of the battery cell B toward the center to attach the label L to the side surface of the battery cell B (S30). As described above, since both the side surfaces of the battery cell B are directly pressed through the pressing block 430, the side surface of the battery cell B may be uniformly attached without being affected by tolerance. The pressing block 430 may move horizontally in a straight line to both the side surface of the battery cell B using a driving unit 431 using an elastic body such as a spring to press the bent label L to both the side surfaces of the battery cell B.

In addition, as illustrated in (d) of FIG. 6, the label L lifted on the side surface of the battery cell B may be attached to the upper surface of the battery cell B as attachment roller 440a and 440b moves horizontally (S40). Here, the attachment rollers 440a and 440b may closely attach the left and right labels L protruding from the upper portion of the battery cell B to the upper surface of the battery cell B while the attachment rollers 440a and 440b reciprocate linearly in the left and right direction.

In operation S40, the attachment rollers 440a and 440b may horizontally move in a state in which the battery cell B is fixed so that the lifted label L is attached to the upper surface of the battery cell B, or the battery cell B may horizontally move in a state in which the attachment rollers 440a and 440b are fixed so that the lifted label L is attached to the upper surface of the battery cell B.

For example, the two attachment rollers 440a and 440b may horizontally move at the same time from both the side surface of the battery cell B, which are directly fixed, toward the center, and thus, the label L may be attached simultaneously to be in close contact with the upper portion of the battery cell B. However, in the two attachment rollers 440a and 440b, the left attachment roller 440a may move first from the left side to the center so that the left label L is attached to be in close contact with the upper portion of the battery cell B, and then, the right attachment roller 440a may move from the right side to the center so that the right label L is attached to be in close contact with the upper portion of the battery cell B. As described above, the left and right labels L may be sequentially attached in this manner.

As another example, in the state in which the two attachment rollers 440a and 440b are fixed, while the battery cell B moves horizontally toward the attachment roller 440a disposed at one side, a portion of the label L may be attached to be in close contact with the upper portion of the battery cell B by the attachment roller 440a at one side. Thereafter, while the battery cell B moves horizontally toward the attachment roller 440b disposed at the other side, a portion of the label L may be attached to be in close contact with the upper portion of the battery cell B by the attachment roller 440b at the other side.

When the process of attaching the label for the battery cell is completed, the battery cell with the label L attached may be discharged to the outside through a battery cell discharge unit 500.

Although the specific embodiments are described and illustrated by using specific terms, the terms are merely examples for clearly explaining the embodiments, and thus, it is obvious to those skilled in the art that the embodiments and technical terms can be carried out in other specific forms and changes without changing the technical idea or essential features. Therefore, it should be understood that simple modifications in accordance with the embodiments of the present invention may belong to the technical spirit of the present invention.

The symbols and names of each component used in the specification and drawings of the present invention are as follows.

| | | | |
|---|---|---|---|
| B: | Battery cell | L: | Label |
| 100: | Label supply unit | 200: | Label alignment unit |
| 300: | Battery cell input unit | 400: | Label attachment unit |
| 410: | Cell mounting part | 420: | Air injection part |
| 420a, 420b: | Air injection port | 430a, 430b: | Pressing block |
| 440: | Roller part | 440a, 440b: | Attachment roller |
| 500: | Battery cell discharge unit | | |

## Claims

1. An apparatus for attaching a label for a battery cell, the apparatus comprising:
a cell mounting part configured to mount a battery cell (B) and attach a label (L) on a front surface of the battery cell (B);
an air injection part disposed on a bottom surface of the cell mounting part, on which the battery cell (B) is mounted, to inject air upward;
a pressing block horizontally moving from both sides of the cell mounting part toward both side surfaces of the battery cell (B) to press the label (L); and
a roller part horizontally moving on a upper surface of the battery cell (B) so that a portion of the label (L) is attached to be in close contact with the upper surface of the battery cell (B).

2. The apparatus for attaching a label for a battery cell of claim 1, wherein the cell mounting part is configured to adjust a position of the label (L) so that a center of the label (L) being transferred is aligned with a center of a front surface of the battery cell (B).

3. The apparatus for attaching a label for a battery cell of claim 1, wherein the air injection part comprises at least two air injection ports to inject air from both the side surfaces of the label (L), which is attached to the front surface of the battery cell (B), toward the battery cell (B) direction.

4. The apparatus for attaching a label for a battery cell of claim 3, wherein the air injection ports are disposed to be spaced an interval that is wider by a predetermined distance or more than a width of the battery cell (B).

5. The apparatus for attaching a label for a battery cell of claim 3, wherein the air injection port is configured to protrude by a predetermined height from a bottom surface of the cell mounting part.

6. The apparatus for attaching a label for a battery cell of claim 5, further comprising at least one or more lifting protrusions between the air injection ports and the side surface of the battery cell (B) at the bottom surface of the cell mounting part.

7. The apparatus for attaching a label for a battery cell of claim 1, wherein the pressing block horizontally moves in a straight line to both the side surfaces of the battery cell (B) through a driving unit using an elastic body to directly press the bent label (L) so that the label (L) is attached to the side surface of the battery cell (B).

8. The apparatus for attaching a label for a battery cell of claim 1, wherein a upper surface of the pressing block is disposed on a plane at the same height as the upper surface of the battery cell (B).

9. The apparatus for attaching a label for a battery cell of claim 1, wherein the pressing block is provided with a guide rail/guide groove so as to be slidable on the bottom surface of the cell mounting part.

10. The apparatus for attaching a label for a battery cell of claim 6, wherein the pressing block has at least one moving grooves in a lower end thereof.

11. The apparatus for attaching a label for a battery cell of claim 1, wherein the roller part comprises at least two attachment rollers and is configured to linearly reciprocate on the upper surface of the battery cell (B) so that the label (B) is attached to the upper surface of the battery cell (B).

12. A method for attaching a label for a battery cell, the method for attaching a label for a battery cell comprising:
a process (A) of mounting a battery cell (B) transferred from a battery cell input unit on a cell mounting part (410) to attach a label (L) transferred through a label supply unit on a center of a front surface of the battery cell (B);
a process (B) of injecting air from an air injection portion provided on a bottom surface of the cell mounting part to lift both side surfaces of the label (L) attached to the front surface of the battery cell (B) in a direction of the battery cell (B);
a process (C) of allowing a pressing block to directly press the label (L) of a side surface of the battery cell (B) from both the side surfaces of the battery cell (B) toward a center so that the label (L) of the side surface of the battery cell (B) is attached to the side surface of the battery cell (B); and
a process (D) of attaching the label (L) lifted on the side surface of the battery cell (B) to the upper surface of the battery cell (B) while an attachment roller horizontally moves on the upper surface of the battery cell (B).

13. The method for attaching a label for a battery cell of claim 12, wherein the process (A) further comprises a process of adjusting a position of the label (L) so that a center of the label (L) transferred through the label supply unit is aligned with a center of the upper surface of the battery cell (B).

14. The method for attaching a label for a battery cell of claim 12, wherein, in the process (C), the pressing block horizontally moves in a straight line to both the side surfaces of the battery cell (B) by using a driving unit using an elastic body.

15. The method for attaching a label for a battery cell of claim 12, wherein, in the process (D), in a state in which the battery cell (B) is fixed, the attachment roller horizontally moves and in the meanwhile the lifted label (L) is attached to the upper surface of the battery cell (B).

16. The method for attaching a label for a battery cell of claim 15, wherein, in the process (D), the two attachment rollers horizontally moves simultaneously or sequentially from both the side surfaces of the battery cell (B), which are directly fixed, toward a center.

17. The method for attaching a label for a battery cell of claim 12, wherein, in the process (D), in a state in which the attachment roller is fixed, the battery cell (B) horizontally moves and in the meanwhile the lifted label (L) is attached to the upper surface of the battery cell (B).

18. The method for attaching a label for a battery cell of claim 17, wherein the process (D) comprises:
a process of allowing the battery cell (B) to horizontally move toward a first attachment roller disposed at one side and in the meanwhile a portion of the label (L) is attached to be in close contact with an upper portion of the battery cell (B) by the first attachment roller in a state in which two first and second attachment rollers are fixed; and
a process of allowing the battery cell (B) to horizontally move toward the second attachment roller disposed at the other side and in the meanwhile a portion of the label (L) is attached to be in close contact with the upper portion of the battery cell (B) by the second attachment roller in the state in which the two first and second attachment rollers are fixed.
